# EUROPEAN PATENT APPLICATION

(11) **EP 2 322 577 A1**
(43) Date of publication of application: **18.05.2011**
(21) Application number: 09800186.0
(22) Date of filing: 15.07.2009
(51) Int. Cl.: C08L 67/02, C08G 63/183, C08K 3/00, C08K 5/3492, C08K 5/5313

(54) **FLAME-RETARDANT POLYBUTYLENE TEREPHTHALATE-BASED RESIN COMPOSITION**

(30) Priority: 21.07.2008 JP 2008188000
(71) Applicant: Mitsubishi Engineering-Plastics Corporation, Tokyo 105-0021 (JP)
(72) Inventor: TSUNODA, Morio, Hiratsuka-shi Kanagawa 254-0016 (JP); TAKISE, Osamu, Hiratsuka-shi Kanagawa 254-0016 (JP); YAMANAKA, Yasushi, Hiratsuka-shi Kanagawa 254-0016 (JP)
(74) Representative: Zimmermann & Partner
(86) International application number: PCT/JP2009/003315
(87) International publication number: WO 2010/010669

(57) **Abstract**

Provided is a resin article comprising a non-halogen series flame retardant to which high flame resistance is imparted. A flame-retardant polybutylene terephthalate series resin composition comprising 100 parts by weight of a polybutylene terephthalate series resin (A) having a glass-transition temperature according to the dynamic viscoelastic method of 0°C to 75°C, and 5 to 70 parts by weight of a metal phosphinate (B).

## Description

### [TECHNICAL FIELD]

The invention relates to a flame-retardant polybutylene terephthalate series resin composition excellent in flame resistance without aid of halogen series flame retardants. The resin composition provides a flame-retardant polybutylene terephthalate series resin article which is excellent in flame resistance, mechanical characteristic, electric characteristic (tracking resistance), moldability, and appearance, and in which the bleeding-out is suppressed.

### [RELATED ART]

Polybutylene terephthalate series resin (hereinafter, referred to as "PBT") has excellent characteristics, and therefore, has been widely used for electric or electronic components and automobile components. Heretofore, PBT has achieved high functionalization and technical advantages thereof in accordance with demanded characteristics.

In recent years, resin articles have been progressed to be thinned for decreasing components weight and downsizing components. For this, there is a demand for PBT which is excellent in flowability in molding and has a large degree of mechanical strength even if the PBT is formed to be thin.

In the field of electronic or electrical devices, characteristics which are further demanded are high flame resistance for ensuring the safety against fire disaster, and tracking resistance which is one of electric characteristics for ensuring the safety against ignition due to electric load.

As a means to impart a thermoplastic resin with flame resistance, an organic halogen series flame retardant is broadly used. Such a flame retardant, however, has a problem in that the resin article may produce dioxine to pollute ambient environment when a resin article comprising the flame retardant is discarded by incineration or the like. Therefore, it is variously investigated to impart a thermoplastic resin with flame resistance by using a non-halogen series flame retardant which does not comprise any halogen.

Concretely, suggested is a method in which polyphosphate esters are used as a flame retardant, wherein polyester resin is exemplified as a target to be imparted with flame resistance (See, for example Patent Document 1). However, even if such a flame retardant is used, the obtained PBT resin composition is insufficient in flame resistance and is not sufficiently improved for dripping at the time of combustion. Therefore, the PBT resin composition did not achieve V-0 in UL-94 which is a flame resistance test.

In high-temperature environment, there was another problem in deterioration of appearance and deterioration of electric characteristics (deterioration of volume resistance value and the like) due to bleeding-out (blooming) which is considered to be caused by such a flame retardant.

In order to improve the dripping, suggested is a method for imparting a resin composition in which polyphenylene ether resin is incorporated into polyester resin into flame resistance by using ester phosphate(See, for example Patent Document 2). However, such a resin composition hardly becomes a high-toughness resin composition because the polyester resin has an extremely low compatibility with the polyphenylene ether.

As non-halogen series flame retardant, suggested is a combination of a particular phosphinate or diphosphinate with an organic nitrogen-containing compound such as melamine (See, for example, Patent Documents 3 and 4) . However, in order to exhibit good flame resistance, it generally needs to increase the amount to be added of the flame retardant, which causes problems in that the moldability and mechanical characteristic are degraded.

When a flame retardant is added to PBT, then the obtained resin composition generally degrades in toughness, as represented by tensile elongation. As a method for improving that, a method for decreasing the amount to be added of the flame retardant by incorporating a flame retardant synergist, and a method for adding a flexible resin such as elastomer are suggested.

For example, a suggested means is to incorporate a fluorine resin as a flame retardant synergist (See, for example Patent Document 5). However, for example, when the resin composition in which a fluorine resin is incorporated is formed to a flakiness article having a thickness of 1 mm or less, then the resin composition has problems in that the flowability thereof is greatly reduced and the moldability becomes poor, and in that the flakiness article has a large amount of warpage.

On the other hand, when a flexible resin such as elastomer is incorporated into the resin composition, there was a problem in that the flame resistance thereof remarkably reduces by incorporating an olefin series or a styrene series elastomer. In addition, a suggested means is incorporation of a polyester series elastomer (polyester block copolymer) (See, for example Patent Document 6). In the means, when the olefin series elastomer is incorporated, then the flame resistant reduces in less degree. However, the polyester series elastomer dose not have sufficient compatibility with PBT, and therefore, the improvement of toughness is limited. The resin composition comprising a polyester series elastomer and PBT has a problem in that the polyester elastomer is poor in dispersibility, and therefore, the tensile elongation thereof is unstable, thereby not improving the toughness.

[Patent Document 1] JP-A-S59-202240
[Patent Document 2] JP-A-H10-147699
[Patent Document 3] JP-A-S55-5979
[Patent Document 4] JP-A-H11-60924
[Patent Document 5] JP-A-2006-117721
[Patent Document 6] JP-A-H9-53007

### [DISCLOSURE OF INVENTION]

### [PROBLEMS TO BE RESOLVED BY THE INVENTION]

Under such a situation, an object of the invention is to provide a polybutylene terephthalate series resin composition to which high flame resistance is added by using a non-halogen series flame resistance and which is excellent in electric resistance and moldability

### [MEANS OF SOLVING THE PROBLEMS]

The inventors have found that the above object is achieved by incorporating a metal phosphinate, preferably both of a metal phosphinate and a salt of an amino group-containing triazine into a polybutylene terephthalate series resin of which glass-transition temperature falls in a particular range. Thereby, the inventors have completed the invention.

Specifically, the object has achieved by the following means:
[1] A flame-retardant polybutylene terephthalate series resin composition comprising 100 parts by weight of a polybutylene terephthalate series resin (A) having a glass-transition temperature according to the dynamic viscoelastic method of 0°C to 75°C, and 5 to 70 parts by weight of a metal phosphinate (B).
[2] The flame-retardant polybutylene terephthalate series resin composition according to [1], wherein the polybutylene terephthalate series resin (A) is a resin in which 70 mole % or more of carbonic acid component and 70 mole % or more of alcohol component is a component derived from terephthalic acid and a component derived from 1,4-butanediol account for and, respectively; and the polybutylene terephthalate series resin (A) comprises any one of components derived from polytetramethylene ether glycol, dimer acid, and isophthalic acid as a copolymerized component.
[3] The flame-retardant polybutylene terephthalate series resin composition according to [1] or [2], wherein the polybutylene terephthalate series resin (A) is selected from the group consisting of the following (1) to (4):
   (1) a resin mainly composed of components derived from terephthalic acid, 1,4-butanediol and polytetramethylene ether glycol, wherein the content of the other components is 3% by weight or less, and the content of the component derived from polytetramethylene ether glycol is 2 to 30% by weight;
   (2) a resin mainly composed of components derived from terephthalic acid, 1,4-butanediol and dimer acid, wherein the content of the other components is 3% by weight or less, and the content of the component derived from dimer acid is 0.5 to 30 mole%, relative to the content of the acid component;
   (3) a resin mainly composed of components derived from terephthalic acid, 1,4-butanediol and isophthalic acid, wherein the content of the other components is 3% by weight or less, and the content of the component derived from isophthalic acid is 1 to 30 mole%, relative to the content of the acid component;
   (4) a mixture of any one of the above-mentioned (1) to (3) and a polybutylene terephthalate resin comprising a copolymerized component in an amount of 3% by weight or less, wherein the content of the polybutylene terephthalate resin in the mixture is 90% by weight or less.
[4] The flame-retardant polybutylene terephthalate series resin composition according to [1] or [2], wherein the polybutylene terephthalate series resin (A) is selected from the group consisting of the following (1) to (4):
   (1) a resin mainly composed of components derived from terephthalic acid, 1,4-butanediol and polytetramethylene ether glycol having a number average molecular weight of 500 to 5000, wherein the content of the other components is 3% by weight or less, and the content of the component derived from polytetramethylene ether glycol is 3 to 25% by weight;
   (2) a resin mainly composed of components derived from terephthalic acid, 1,4-butanediol and dimer acid, wherein the content of the other components is 3% by weight or less, and the content of the component derived from dimer acid is 3 to 15% by weight, relative to the content of the acid component;
   (3) a resin mainly composed of components derived from terephthalic acid, 1,4-butanediol and isophthalic acid, wherein the content of the other components is 3% by weight or less, and the content of the component derived isophthalic acid is 3 to 15% by weight, relative to the content of the acid component;
   (4) a mixture of any one of the above-mentioned (1) to (3) and a polybutylene terephthalate resin other than the above-mentioned (1) to (3) comprising acopolymerized component therewith in an amount of 3% by weight or less, wherein the amount to be added of the polybutylene terephthalate resin in the mixture is 85% by weight or less.
[5] The flame-retardant polybutylene terephthalate series resin composition according to any one of [1] to [4], wherein the polybutylene terephthalate series resin has a glass-transition temperature of 0 to 65°C.
[6] The flame-retardant polybutylene terephthalate series resin composition according to any one of [1] to [5], wherein the metal phosphinate (B) has an anion part represented by the formula (2) or (3) and a cation part selected from the group consisting of calcium ion, magnesium ion, aluminum ion and zinc ion: 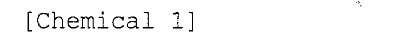 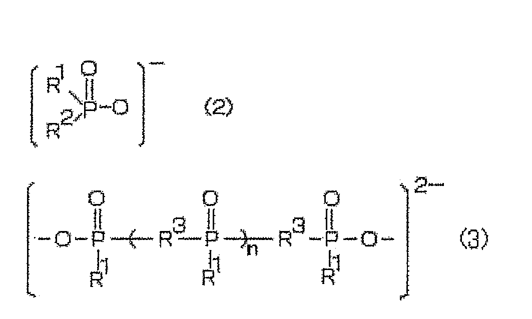 wherein R¹' s and R²' s each independently are an alkyl group having 1 to 6 carbon atoms, or an aryl group which may have a substituent; each R¹ may be the same or different to each other; R³' s are an alkylene group having 1 to 10 carbon atoms, an arylene group which may have a substituent, or a combination thereof; R³' s may be the same or different to each other; n is an integer to 0 to 2.
[7] The flame-retardant polybutylene terephthalate series resin composition according to any one of [1] to [6], wherein all melting peaks of the metal phosphinate (B) according to the DCS measurement falls within a range of 180°C or more.
[8] The flame-retardant polybutylene terephthalate series resin composition according to any one of [1] to [7], wherein the amount to be added of the metal phosphinate (B) is 10 to 60 parts by weight, relative to 100 parts by weight of the polybutylene terephthalate series resin.
[9] The flame-retardant polybutylene terephthalate series resin composition according to any one of [1] to [8], which further comprises 40 parts by weight or less of a salt of an amino group-containing triazine (C), relative to 100 parts by weight of the polybutylene terephthalate series resin.
[10] The flame-retardant polybutylene terephthalate series resin composition according to any one of [1] to [8], which further comprises 30 to 50 parts by weight of a salt of an amino group-containing triazine (C), relative to 100 parts by weight of the polybutylene terephthalate series resin.
[11] The flame-retardant polybutylene terephthalate series resin composition according to [9] or [10], wherein the amount ratio of the salt of an amino group-containing triazine (C) to the metal phosphinate (B) ((C)/(B)) is 0.1 to 2.
[12] The flame-retardant polybutylene terephthalate series resin composition according to any one of [1] to [11], which further comprises 150 parts by weight or less of an inorganic filler (D), relative to 100 parts by weight of the polybutylene terephthalate series resin.
[13] An article formed from the flame-retardant polybutylene terephthalate series resin composition according to any one of [1] to [12].

### [EFFECT OF THE INVENTION]

The flame-retardant polybutylene terephthalate series resin composition which is provided by the invention is imparted with high flame resistance by using a non-halogen series flame retardant and is excellent in electric resistance and moldability.

### [EMBODIMENT FOR CARRYING OUT THE INVENTION]

Contents of the present invention will be detailed below. Note that a word "... to ..." in this specification will be used to indicate a range including the lower and upper limits represented by the numerals given therebefore and thereafter, respectively. In this patent specification, any "group" such as alkyl group may have substituent (s) or may have no substituent, unless otherwise specifically noted.

### (A) Polybutylene terephthalate series resin

In the invention, (A) polybutylene terephthalate series resin is a polyester resin which composed of terephthalic acid and 1,4-butanediol as a main component, of which the glass-transition temperature falls in 0 to 75°C.

The polybutylene terephthalate series resin to be generally used is a resin in which 70 mole % or more of the carbonic acid component and 70 mole % or more of the alcohol component is terephthalic acid component and 1,4-butanediol component, respectively. The Tg of the polybutylene terephthalate series resin may be adjusted by co-polymerizing terephthalic acid and 1,4-butanediol with another dicarboxylic acid, a diol, a hydroxy carbonic acid or the like. The Tg of the polybutylene terephthalate series resin is preferably 0 to 65°C, preferably 0 to 60°C.

When the glass-transition temperature thereof is too low, then it is difficult to ensure desired mechanical strength, heat resistance and flame resistance of the resin article obtained by molding the resin composition of the invention. To the contrary, when the Tg thereof is too high, then it is difficult to ensure toughness of the resin article. In the invention, the glass-transition temperature (Tg) is defined as a peak temperature of loss elastic modulus (E") obtained by measuring the dynamic viscoelasticity at a frequency of 110 Hz in dynamic viscoelastic measuring apparatus, Rheogel-E4000, manufactured by UBM.

Examples of the dicarboxylic acid other than terephthalic acid as combined with terephthalic acid include aromatic dicarboxylic acids such as phthalic acid, isophthalic acid, 4,4'-diphenyldicarboxylicacid, 4,4'-diphenyl ether dicarboxylic acid, 4,4'-benzophenone dicarboxylic acid, 4,4'-diphenoxyethanedicarboxylic acid, 4,4'-diphenylsulfone dicarboxylic acid, and 2, 6-naphthalene dicarboxylic acid; alicyclic dicarboxylic acids such as 1, 2-cyclohexanedicarboxylic acid, 1, 3-cyclohexanedicarboxylic acid, and 1, 4-cyclohexanedicarboxylic acid; aliphatic dicarboxylic acids such as malonic acid, succinic acid, glutaric acid, adipic acid, pimelic acid, suberic acid, azelaic acid, sebacic acid, and dimer acid.
One kind thereof, or two or more kinds thereof combined at any ratio may be used. Further, the dicarboxylic acid may be involved to the reaction as a lower alkyl glycol ester.

Examples of the diol other than 1,4-butanediol as combined with 1,4-butanediol include aliphatic diols such as ethylene glycol, diethylene glycol, polyethylene glycol, 1,2-propanediol, 1,3-propanediol, polypropylene glycol, polytetramethylene glycol, dibutylene glycol, 1,5-pentanediol, neo pentylglycol, 1,6-hexanediol, and 1,8-octanediol; alicyclic diols such as 1,2-cyclohexanediol, 1,4-cyclohexanediol, 1,1-cyclohexanedimethylol, and 1,4-cyclohexanedimethylol; aromatic diols such as xylylene glycol, 4,4'-dihydroxybiphenyl, and 2,2-bis (4-hydroxyphenyl) propane, bis(4-hydroxyphenyl) sulfone. One kind thereof, or two or more kinds thereof combined at any ratio may be used.

Examples of the hydroxycarboxylic acid include lactic acid, glycolic acid, m-hydroxybenzoic acid, p-hydroxybenzoic acid, 6-hydroxy-2-naphthalenecarboxylic acid, and p-β-hydroxyethoxybenzoic acid. In addition, may becopolymerized with a monofunctional compound such as stearyl alcohol, benzyl alcohol, stearic acid, benzoic acid, t-butyl benzoic acid, and benzoylbenzoic acid; or a polyfunctional compound having three or more functional groups such as tricarballylic acid, trimellitic acid, trimesic acid, pyromellitic acid, gallic acid, trimethylolethane, trimethylolpropane, glycerol, and pentaerythritol.

In the invention, the polybutylene terephthalate series resin to be used has generally an intrinsic viscosity of 0.5 or more, preferably 0.6 or more, and generally 3 or less, preferably 2 or less. The intrinsic viscosity is measured by using a mixture solvent of 1,1,2,2-tetrachloroethane / phenol =1/1 (ratio by weight) at temperature of 30 °C. When the intrinsic viscosity is too low, then the mechanical strength of the resin composition becomes too low. To the contrary, when the intrinsic viscosity is too large, then the moldability of the resin composition reduces. As the polybutylene terephthalate series resin for use in the invention, two or more kinds thereof which differ in intrinsic viscosity to each other are combined to be adjusted to have a desired intrinsic viscosity.

Of those, the polybutylene terephthalate series resin for use in the invention is preferably a resin in which a component derived from terephthalic acid and a component derived from 1,4-butanediol account for 70 mole % or more of the carbonic acid component and 70 mole % or more of the alcohol component, respectively, and the maincopolymerized component is a component derived from at least one selected from the group consisting of poly alkylene glycol, isophthalic acid, and dimer acid.

As the component other than terephthalic acid and 1,4-butanediol, a co-polymerizable component other than the mentioned above may be combined as far as the amount to be added thereof is 3% by weight or less, relative to the polybutylene terephthalate series resin. Of those, preferred are the following copolymers (A-1) to (A-3).

### (A-1) Polytetramethylene ether glycol copolymer resin

Polytetramethylene ether glycol copolymer (hereinunder, may be referred to as polyester ether resin) is a polyester ether resin obtained by co-polymerizing dicarboxylic acid of which main component is terephthalic acid with diol of which main components are 1, 4-butanediol and polytetramethylene ether glycol. The ratio of the component derived from polytetramethylene ether glycol therein is 2 to 30% by weight.

When the ratio of the component is less than 2% by weight, then it is difficult to impart a desired toughness with the resin article. When the ratio of the component is more than 30% by weight, then the moldability of the resin composition reduces and the resin article is insufficient in strength and heat resistance. The ratio of the component derived from polytetramethylene ether glycol is more preferably 3 to 25% by weight, further more preferably 5 to 20% by weight.

The number average molecular weight of polytetramethylene ether glycol for use in the invention may be suitably selected, and is preferably 300 to 6000, more preferably 500 to 5000, particularly preferably 500 to 3000.

When the number average molecular weight thereof is too small, then the improvement of the toughness thereof is not sufficiently exhibited. To the contrary, when the number average molecular weight thereof is too large, then the resin composition tends to be poor in heat resistance. When the polyester copolymer is used as a mixture with the PBT as mentioned below and the number average molecular weight thereof is too large, then compatibility of the polyester copolymer with the other PBT in a mixture is poor, and therefore, the improvement of the toughness of the obtained resin composition does not exhibit.

The number average molecular weight of polytetramethylene ether glycol may be measured by reacting polytetramethylene ether glycol with excess of acetic anhydride to thereby decompose the residual acetic anhydride with water and to form an acid, and quantitating the acid by alkalimetry.

The melt viscosity [η] of the polyester ether resin for use in the invention is preferably 0.7 to 2, more preferably 0.8 to 1.6. The measurement is carried out by using a mixture solvent of tetrachloroethane and phenol at ratio by weight of 1/1 at temperature of 30°C.

When the melt viscosity of the polyester ether resin is too low or too high, then the moldability of the resin composition comprising it and the toughness of the resin article reduce. The melting point of the polyester ether resin is 200 to 225°C, preferably 205 to 222°C.

### (A-2)Dimer acid-copolymerized polyester resin

Dimer acid-copolymerized polyester resin is acopolymerized polyester obtained by co-polymerizing glycol of which main component is 1,4-butanediol, terephthalic acid and dimer acid.

The ratio of dimer acid component to all the carboxylic acid components is 0.5 to 30 mol% in terms of an amount of carboxylic acid group. When the ratio of dimer acid is too large, then the long-term heat resistance of the resin composition comprising such a polyester resin remarkably reduces. To the contrary, when the ratio of dimer acid is too small, then the toughness thereof remarkably reduces. The ratio of dimer acid to all the carboxylic acid components is preferably 1 to 20 mol%, more preferably 3 to 15 mol% in terms of an amount of carboxylic acid group.

The dimer acid for use in the invention is generally an unsaturated fatty acid having 18 carbon atoms, and is concretely exemplified by dimer acid obtained by subjecting oleic acid, linolic acid, linolenic acid, elaidic acid, or the like to dimerization reaction using clay catalysis such as montmorillonite, or the like.

A product obtained by the dimerization reaction is a mixture comprising dimer acid having 36 carbon atoms as the main component and another component such as trimer acid having 54 carbon atoms and monomer acid having 18 carbon atoms. The mixture is distilled through vacuum distillation, molecular distillation, hydrogenation reaction, or the like to obtain a dimer acid.

The dimer acid is not composed of a single compound, and is generally a mixture of compounds which each may comprise a chain structure, an aromatic ring structure, an alicyclic monocyclic structure or an alicyclic polycyclic structure. For example, when a raw material of the dimer acid comprises a linoleic acid component at a large amount, then the obtained dimer acid is a dimer acid in which an amount of a compound having a chain structure is decreased and an amount of a compound comprising a cyclic structure is increased.

The dimer acid for use in the production of the polyester copolymer for use in the invention is preferably a dimer acid comprising a chain dimer acid represented by the following formula (1) in an amount of 10% by weight or more;

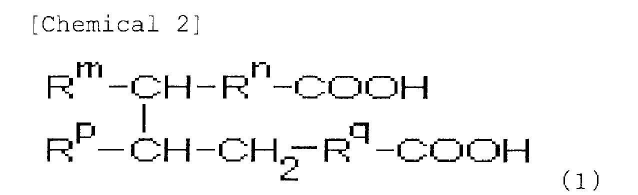

wherein R^{m} and R^{p} each independently are an alkylene group; Rⁿ and R^{q} each independently are akylene group; R^{m}, Rⁿ, R^{p} and R^{q} have 28 to 46 carbon atoms in total.

Preferably used is the dimer acid comprising the chain dimer acid in an amount of 10% by weight or more because the obtained polyester copolymer resin itself is improved in tensile elongation, and therefore, the resin composition of the invention comprising the resin is favorably improved in tensile elongation.

The amount ratio of monomer acids contained in the dimer acid is preferably 1% by weight or less. The monomer acid inhibits a resin to be produced from having a high-molecular polymer during the copolymerization. However, when the amount ratio of monomer acid is 1% by weight, then the condensation polymerization sufficiently progresses during the copolymerization, and therefore, the obtained copolymer has a high molecular weight, improving the toughness of the resin composition of the invention.

Preferable specific examples of the dimer acid include PRIPOL 1008 and PRIPOL 1009 which are manufactured by Uniqema, and further include PRIPLAST 3008 which is manufactured by Uniqema and is an ester-forming derivative of PRIPOL 1008, and PRIPLAST 1899 which is an ester-forming derivative of PRIPOL 1009.

A method for producing the copolymerized polyester resin using the dimer acid is not specifically limited, and the production may be carried out in accordance with a well-known method such as the method disclosed in JP-A-2001-064576.

### (A-3) Isophthalic acidcopolymerized polyester resin

Isophthalic acidcopolymerized polyester resin is acopolymerized polyester obtained by copolymerizing glycol of which is mainly 1,4-butanediol with dicarboxylic acids of which are mainly terephthalic acid and isophthalic acid.

The ratio of isophthalic acid component in all the carbonic acid components is 1 to 30 mol% in terms of an amount of carboxylic acid groups. When the ratio of isophthalic acid is too large, then the heat resistance of the resin composition comprising such a polyester resin reduces, and the injection moldability thereof also reduces. To the contrary, when the ratio of isophthalic acid is too small, then the improvement of the toughness is not sufficient. Therefore, the amount ratio of isophthalic acid components in all the carbonic acid components is preferably 1 to 20 mol%, particularly preferably 3 to 15 mol% in terms of an amount of carboxylic acid groups.

### (A-4) Mixture of copolymerized polyester and other PCT

The mixture is a mixture of any one of the copolymerized polyesters (A-1) to (A-3) as mentioned above and a PBT other than the above polyesters, preferably a mixture of any one of the copolymerized polyesters (A-1) to (A-3) as mentioned above and a PBT comprising 3% by weight or less of acopolymerized component at a ratio by weight of 100/0 to 10/90.

Of those, the mixed ratio by weight thereof is preferably 100/0 to 15/85, particularly preferably 100/0 to 30/70. When the copolymerized polyester and the other PBT are melted and kneaded, then they are easily dispersed by a double-screw extruder or the like. However, the respective melt viscosities preferably are matched to each other.

### (B) Metal phosphinate

In the invention, a metal phosphinate is used as a flame retardant. The metal phosphinate for use in the invention is preferably a metal phosphinate in which the anion part is represented by the formula (2) or the formula (3), and metal ion in the cation part is any one of calcium, magnesium, aluminium, and zinc.

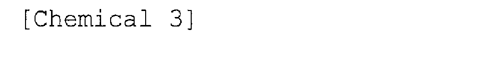

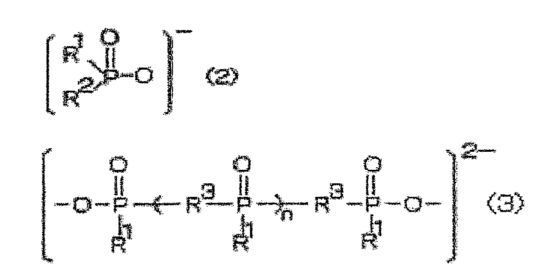

wherein R¹' s and R²' s each independently are an alkyl group having 1 to 6 carbon atoms, or an aryl group which may have a substituent; R¹' s each may be the same or different to each other; R³' s are an alkylene group having 1 to 10 carbon atoms, an arylene group which may have a substituent, or a combination thereof; R³' s each may be the same or different to each other; n is an integer to 0 to 2.

Specific examples of the metal phosphinate include calcium dimethyl phosphinate, magnesium dimethyl phosphinate, aluminum dimethyl phosphinate, zinc dimethyl phosphinate, calcium ethylmethyl phosphinate, magnesium ethylmethyl phosphinate, aluminum ethylmethyl phosphinate, zinc ethylmethyl phosphinate, calcium diethyl phosphinate, magnesium diethyl phosphinate, aluminum diethyl phosphinate, zinc diethyl phosphinate, calcium methyl-n-propyl phosphinate, magnesium methyl-n-propyl phosphinate, aluminum methyl-n-propyl phosphinate, zinc methyl-n-propyl phosphinate, calcium methane di- (methyl phosphinic acid), magnesium methane di-(methylphosphinic acid), aluminium methane bis-(methyl phosphinic acid), zinc methane bis-(methyl phosphinic acid), calcium benzene-1,4-bis(methyl phosphinic acid), magnesium benzene-1,4-bis(methyl phosphinic acid), aluminum benzene-1,4-bis(methyl phosphinic acid), zinc benzene-1,4-bis(methyl phosphinic acid), and calcium methylphenyl phosphinate, magnesium methylphenyl phosphinate, aluminum methylphenyl phosphinate, zinc methylphenyl phosphinate, calcium diphenyl phosphinate, magnesium diphenyl phosphinate, aluminum diphenyl phosphinate, and zinc diphenyl phosphinate.

In the invention, those compounds may be used singly or in combination of two or more thereof at an arbitrary ratio. Of those, particularly preferred are aluminum diethyl phosphinate, calcium diethyl phosphinate, and zinc diethyl phosphinate from the viewpoints of the flame resistance and the electric characteristics. From the viewpoint of the toughness, preferred is a metal phosphate in which all the peaks of melting temperatures (Tm) appear at 180°C or more, preferably 180 to 200°C according to the DSC measurement (Differential Scanning Calorimetry, the measuring condition : elevated temperature from 30°C to 300°C at 20°C/min).

The metal phosphinate for use in the invention preferably has a particle diameter of 100 µm or less at a ratio of 95% by weight or more according to the measurement of laser diffractometry because the particle diameter of the metal phosphate affects appearance and mechanical strength of the resin article obtained from the resin composition. Of those, preferred is a metal phosphate having a particle diameter of 50 µm or less at a ratio of 95% by weight, concretely, for example, powder obtained by graining the metal phosphate.

However, generally, when the particle diameter of the metal phosphinate is smaller, then the preparing cost becomes more expensive, but the exertion of the effect decreases for slight degree. Therefore, the metal phosphinate preferably has a particle diameter of 20 to 40µm at a ratio of 90% by weight or more.

The resin composition comprises 50 to 70 parts by weight of the metal phosphinate (B) for use in the invention, relative to 100 parts by weight of the polybutylene terephthalate series resin (A). When the amount to be added of the metal phosphinate is less than 5 parts by weight, the flame resistance as the object is not sufficient. When the amount to be added thereof is more than 70 parts by weight, the resin composition tends to reduce in mechanical characteristics and moldability, and to easily cause mold releasing fault and mold deposit. From achievement of both of the flame resistance and the mechanical characteristics, the preferable content to be added is 10 to 60 parts by weight, relative to 100 parts by weight of the polybutylene terephthalate series resin (A).

### (C) Salt of amino group-containing triazine

Further, the resin composition of the invention preferably comprises a salt of an amino group-containing triazine which is one of nitrogen series flame retardants (a salt of an amino group-containing triazine). The inclusion of the salt of an amino group-containing triazine achieves a desired flame retardant effect even if the amount to be added of the metal phosphinate is relatively low.

The amino group-containing triazine is generally 1,3,5-triazine containing an amino group, and is concretely exemplified by melamine, melamines having a substituent such as 2-methylmelamine and guanyl melamine, melamine condensations such as melame, melem and merone, polycondensation resins of melamine such as melamine-formaldehyde resin, amides of cyanuric acid such as ammeline and ammelide, and guanamines and its derivatives (guanamine, methylguanamine, acetoguanamine, benzoguanamine, succinic guanamine, adipo guanamine, phthalonic guanamine, CTU-guanamine).

Acids to form a salt with this may be an inorganic acid or an organic acid. The inorganic acid is concretely exemplified by nitric acid, chloric acids such as chloric acid and hypochlorous acid, phosphoric acids such as phosphoric acid, phosphorous acid, phosphinic acid and polyphosphoric acid, sulfuric acids such as non-condensing sulfuric acid (sulfuric acid and sulfurous acid) and condensation sulfuric acids (peroxso disulfuric acid and pyrosulfuric acid), boric acid, chromic acid, antimonic acid, molybdic acid, and tungstic acid. Of those, preferred are phosphoric acid and sulfuric acid.

The organic acids are concretely exemplified by organic sulfuric acids (aliphatic sulfonic acids such as methanesulfonic acid, and aromatic sulfonic acids such as toluene sulfonic acid and benzene sulfonic acid) and cyclic ureas (uric acid, barbituric acid, cyanuric acid, acethylene urea, and the like).

Of those, preferred are alkanesulfonic acids having 1 to 4 carbon atoms such as methanesulfonic acid, aryl sulfonic acids which may have an alkyl group having 1 to 3 carbon atoms such as toluenesulfonic acid, and cyanuric acid.

The salt of amino group-containing triazines is concretely exemplified by cyanuric acid melamine-melame-melem double salt, melamine phosphates (melamine polyphosphorate, melamine polyphosphorate·melame·melem double salt, etc.), melamine sulfurate (melamine sulfurate, dimelamine sulfuric acid, dimelame pyrosulfuric acid, etc.), melamine sulfonate (melamine methanesulfonate, melame methanesulfonic acid, melem methanesulfonic acid, melamine methanesulfonate-melame-melem double salt, melamine toluenesulfonate, melame toluenesulfonic acid, melamine toluenesulfonate-melame-melem double salt, etc.). Those compounds may be used singly or in combination of two or more thereof at an arbitrary ratio.

Of the nitrogen series flame retardants, preferred is adduct of cyanuric acid or iscyanuric acid to a triazine series compound. The composition of the adduct thereof is generally 1:1 (molar ratio), possibly 1:2 (molar ratio).

The nitrogen series flame retardants are more specifically exemplified by melamine cyanurate, benzogamine cyanurate, aceto guanamine cyanurate. Of those, preferred is melamine cyanurate. For example, those salts in the form of powder may be obtained by preparing water slurry of a mixture of an amino group-containing triazine with cyanuric acid or iscyanuric acid, mixing the both salts to form particles, filtering the slurry and drying the slurry.

Those salts of an amino group-containing triazine may not be completely pure, and the unreacted triazines and cyanuric acid or iscyanuric acid may remain. From the viewpoints of the flame resistance, the mechanical strength, the heat and humidity resistance, the retention stability and the surface characteristics of the resin article obtained from the resin composition of the invention, the salt before incorporated into the resin preferably has an average particle diameter of 100 µm or less, more preferably 80 µm or less at a ratio of 95% by weight. The average particle diameter is measured according to the laser diffractometry.

In the case where the above mentioned salt does not have sufficient dispersibility, a dispersant such as tris (beta-hydroxyethyl) isocyanurate or a known surface treatment agent may be combined with the salt.

The amount to be added of the salt of an amino group-containing triazine (c) in the invention is preferably 0 to 40 parts by weight, more preferably 5 to 30 parts by weight, relative to 100 parts by weight of the polybutylene terephthalate series resin (A) ingredient. When the amount to be added of the salt of an amino group-containing triazine (c) component is more than 40 parts by weight, then the resin article obtained from the resin composition of the invention tends to reduce in mechanical physicality.

The ratio by weight of the amount to be added of the metal phosphinate (B) to the amount to be added of the salt of amino group-containing triazines (c) is generally (C)/(B)=0 to 3. When the ratio by weight of the amounts to be added is more than 3, then it becomes difficult to ensure the flame resistance of the obtained resin composition. Therefore, of those, the ratio by weight is preferably 0.1 to 2, more preferably 0.3 to 1.5.

In the invention, in order to improve dispersibility of the metal phosphinate (B) and the salt of an amino group-containing triazine (C), those components may be preliminarily treated with a dispersant, and then the resin composition may be produced by mixing those components with the other components, or a dispersant may be incorporated into the resin composition when the resin composition is produced. Such a dispersant is exemplified by a liquid dispersant such as monomers and polymers disclosed in JP-A-2004-269885.

The monomer is concretely exemplified by glycols such as ethylene glycol and butanediol and isocyanates such as TDI and MDI. The polymer is exemplified by polyether polyols such as polyethyleneglycol, and epoxy resins such as bisphenol A glycidyl ester, and polyglycidyl ester of phenol-formaldehyde resin or cresol formaldehyde resin.

In order to improve the dispersibility, the flame retardant may be grained and then incorporated thereinto. Concrete example is a metal phosphinate-containing flame retardant grained with a binder such as disclosed in JP-A-2004-99893.

Preferable examples of the binder include waxes such as carnauba wax, montan wax, and polyethylene wax, and polyethylene glycol. The melting point of the binder is preferably 50 to 200°C. The amount to be added of the binder is preferably 0.5 to 10 parts by weight, relative to 100 parts by weight.

The resin composition may comprise known additives which may be called as a flame retardant synergist or a drip inhibitor. The flame retardant synergist is preferably boric acid metal salt, and is specifically alkali metal salts such as sodium tetraborate and potassium metaborate, alkaline earth metal salts such as calcium borate, magnesium orthoborate, barium orthoborate, and zinc borate. Of those, preferred is zinc borate.

The drip inhibitor is preferably a fluorine resin, and is specifically polytetrafluoroethylene, tetrafluoroethylene / perfluoro alkyl vinyl ether copolymer, tetrafluoroethylene / hexafluoro propylene copolymer, tetrafluoroethylene/ethylenic copolymer and the like.

The resin composition of the invention may comprise any other flame retardant without diverting the gist of the invention. However, the amount to be added of a halogen series flame retardant in the resin composition is preferably 2% by mass or less, relative to the all composition.

### (D)Inorganic filler

In order to obtain a resin article excellent in mechanical strength, heat resistance, dimension stability (deformation resistance, warpage), or electronic characteristics, the resin composition of the invention may comprise various kinds of inorganic filler (D) which may be in the form of fiber, powder, or plate. The amount to be added of the inorganic filler (D) is preferably 0 to 150 parts by weight, more preferably 0 to 100 parts by weight, further more preferably 10 to 50 parts by weight, even more preferably 20 to 40 parts by weight, relative to 100 parts by weight of polybutylene terephthalate (A). When the amount to be added exceeds 150 parts by weight, then it becomes to be difficult to ensure toughness of the resin composition.

Examples of the fibrous filler include glass fiber, carbon fiber, silica fiber, silica alumina fiber, zirconia fiber, boron nitride fiber, silicon nitride fiber, boron fiber, and potash titanate fiber. Further, the examples of the fibrous filler include fibrous material composed of metal such as stainless steel, aluminium, titanium, copper, and brass, etc. Especially typical fibrous filler is glass fiber and carbon fiber.

Examples of the powder filler include silicates such as carbon black, silica, quartz powder, glass bead, glass powder, calcium silicate, aluminum silicate, kaolin, talc, clay, diatomaceous earth, and wollastonite, metal oxides such as iron oxide, titanium oxide, zinc oxide, and alumina, metal carbonates such as calcium carbonate and magnesium carbonate, metal sulfate such as calcium sulfate and barium sulfate, other carbonization silicon, silicon nitride, boron nitride, and various metal powder.

Examples of the plate filler include mica, glass flake, and various kinds of metallic foils, etc.
Those inorganic filler may be used singly or in combination of two or more thereof at an arbitrary ratio. A combination of the fibrous fillers, especially a combination of glass fiber, and powder filler and/or plate filler is a preferable combination in view of achievement of all of mechanical strength, dimension accuracy, and electronic characteristics.

When such filler is used, a convergent agent or a surface treatment agent may be used, if necessary. Specific examples thereof include functional compounds such as an epoxy series compound, a silane series compound, and a titanate series compound. The filler may be preliminarily treated by those compounds, or may be added at the same time or separately when the resin composition is prepared.

In order to impart a desired property in accordance with the object thereof to the resin composition of the invention, may be incorporated various known additives which are generally used in a thermoplastic resin composition. Specific examples thereof include stabilizers such as an antioxidant and an ultraviolet absorber, antistatic agents, colorants such as a dye and a pigment, lubricant agents, crystallization promoters, crystal nucleating agents, and hydrolysis resistance improvers (an epoxy compound, a carbodiimide compound, etc.).

In the resin composition of the invention, in addition to the above mentioned component, any other thermoplastic resin may be secondarily used in accordance with the object. Such a thermoplastic resin may be a resin which is stable in high temperature, and is exemplified by polyamide, polyphenylene oxide, polystyrene series resin, polyphenylene sulfide ethylene, polysalfon, polyether salfon, polyetherimide, polyether ketone, fluororesin.

Those thermoplastic resins may be used singly or in combination of two or more thereof at an arbitrary ratio. Further, elastomers such as an impact-resistance improver may be incorporated therein. However, the above mentioned additives and the thermoplastic resins must be incorporated thereinto without impairing the desired effects of the resin composition of the invention.

The production of the flame-retardant polybutylene terephthalate resin composition of the invention is carried out in accordance with facilities and methods which may be generally used for production of known resin compositions. Specific examples thereof include 1) a method comprising mixing individual components, then kneading the resulting mixture by a single-screw kneader or a double-screw kneader and extruding the resulting mixture to form pellets; 2) a method comprising preparing two or more kinds of pellets which are different in composition to each other and which each are composed of raw materials composing the resin composition, then weighing and mixing the pellets so as to have a desired ratio to prepare a resin composition having a desired composition; and 3) a method comprising preliminarily melt-kneading part of raw materials, adding the residual raw material, and kneading the resulting material.

### [Examples]

The invention is described in more detail with reference to the following Examples. However, the invention should not be limited to these Examples. The materials used in the following Examples are mentioned below.

### (A) Resin:

(A-1) Polyester ether copolymer: polybutylene terephthalate resincopolymerized with polytetramethylene ether glycol unit (the number average molecular weight = about 1016) at the amount to becopolymerized of 20% by weight. Tg=22°C. The intrinsic viscosity = 1.3.

(A-2) Polyester resin / dimer acid copolymer: manufactured by Bell polyester products, Inc., PO2120 (product name), polybutylene terephthalate resincopolymerized with dimer acid instead of terephthalic acid at the amount to becopolymerized of 10 mol%. Tg=12°C. The intrinsic viscosity = 0.96.

(A-3) Polyester resin / isophthalic acid copolymer: polybutylene terephthalate series resin obtained by copolymerization using a mixture of terephthalic acid and isophthalic acid as carbonic acid component (the molar ratio is 90 mol% of terephthalic acid and 10 mol% of isophthalic acid). Tg=61°C. The intrinsic viscosity = 1.0.

(A-4) Homo PBT: manufactured by Mitsubishi Engineering-Plastics Corporation, polybutylene terephthalate resin homopolymer obtained by polymerizing terephthalic acid and 1,4-butanediol. Tg=79°C. The intrinsic viscosity = 1.25.

(A-5) Polyester elastomer: manufactured by Mitsubishi chemical corporation, primalloy (product name): polyester elastomer comprising 62% by weight of polytetramethylene glycol unit (the number average molecular weight = about 1016). Tg=-25°C. The intrinsic viscosity =0.98.

### (B) Phosphinate:

(B-1) Metal phosphinate: aluminum salt of 1,2-diethyl phosphinate which was prepared according to the Example in JP-A-11-060924. Both of the phosphinate (B-1) and (B-2) has a particle diameter of 30 to 40µm at a ratio of 90% by weight or more.

(B-1) Aluminum salt of diethyl phosphinate: manufactured by Clariant, OP1240 (product name), Tm : 184°C, 232°C.

(B-2) Aluminum salt of diethyl phosphinate: manufactured by Clariant, OP1230(product name), Tm : 177°C, 225°C.

### (C) Salt of amino group-containing triazine:

(C-1) Melamine polyphosphorate: manufactured by Chiba speciality chemical Co., Ltd, melapure (product name) 200/20

(C-2) Melamine cyanurate: manufactured by Mitsubishi chemical corporation, MX44

### (D) Inorganic filler:

Glass fiber manufactured by Asahi fiber glass Co., Ltd, chopped strand, 03JA-FT592

### (E) Antioxidant:

(E-1) Hindered phenol series antioxidant: manufautured by Chiba speciality chemical Co., Ltd, IRGANOX (product name) 1010

(E-2) Phosphorous antioxidant: manufactured by ADEKA, PEP-36

(F) Mold release agent: manufactured by Nippon Seiro Co., Ltd., paraffin wax, FT100

(G) Drip inhibitor: manufactured by Sumitomo 3M, Fluorine resin, Teflon (Registered trademark), TF1750

Physical characteristic of polyalkylene terephthalate resin and the resin compositions in the Examples and the Comparative Examples were measured and evaluated according to the following method.

### [Evaluation method of performance]

### (1) Tensile testing

Tensile testing: tensile testing was evaluated according to ISO527, using an ISO tensile testing specimen (ISO3167).
Weld tensile testing: the tensile testing specimen for use in evaluating weld performance has the same size as the size of the above mentioned ISO tensile testing specimen and has weld line in the center of the testing specimen obtained by carrying out injection-molding at two point gates from the longitudinal direction of the both sides of the testing specimen. As the weld performance, retention of tensile elongation was measured. The weld performance (weld adhesion) was determined to be excellent when the numerical value is high.

### (2)Flame resistance

UL testing specimen (having a thickness of 1/32 inch) was subjected to UL-94 standard vertical burning testing by Underwriter's Laboratories Inc.. Flame resistance level is evaluated according to the standard as V-0>V-1>V-2>HB in that order. It is required to have flame resistance of V-2 or higher, preferably V-0.

### (3) Comparative tracking index (abbreviated expression: CTI testing)

Concerning a test specimen (having a thickness of 3 mm), CTI was determined according to the testing method defined in International standard, IEC60112. CTI shows resistance to tracking at 25 V intervals from 100 V to 600 V when solid electric insulating material was polluted while electric field is added to a surface of the solid electric insulating material. When the numerical value is high, the tracking index is good, and is preferably 600 V or more.

### (4) Flame retardant-bleeding-out testing

A plate having 10 cm square and having a thickness of 3 mm as a test specimen was subj ected to heat-treatment for 72 hours in a hot-air drier in which the temperature was prepared at 150°C. Then, the surface of the plate was visually observed to classify ○ or x. ○ means that the flame retardant-bleeding-out was not visually observed. × means that the flame retardant-bleeding-out was visually observed.

### (5) Evaluation of amount of warpage

Using an injection-molding machine as mentioned later, a discoidal resin article having a diameter of 100 mm and having a thickness of 1.6 mm was formed at a cylinder temperature of 260°C and a mold temperature of 80 °C. At that time, the resin gate was only one at the side of the thickness direction. When the discoidal resin article was placed on a flat surface and one point of the lower ends was contacted with the flat surface, another end rises from the flat surface. The maximum distance at which the end rises was measured as the amount of warpage.

### (6) Evaluation of mold release performance (Demoldability)

A flat plate having 10 cm square and having a thickness of 3 mm was formed at a cylinder temperature of 270°C, a mold temperature of 80°C and at a formation cycle of 40 seconds for a composition not comprising a glass fiber, or at a formation cycle of 30 seconds for a composition comprising a glass fiber. The mold release performance was evaluated as follows;
○: the ejector pin did not break into the plate during the formation.
×: the ejector pin broke into the plate during the formation.

### [Examples 1 to 11 and Comparative Examples 1 to 8]

As shown in Table 1, pellets of a polybuthylene terephthalate resin composition were obtained by mixing all the components except the glass fiber into super mixer (manufactured by SHINEI-KIKAI Co., Ltd., type : SK-350), feeding the resulting mixture into the hopper of the double-screw extruder having L/D=42 (manufactured by The Japan Steel Works, Ltd., TEX30XCT), side-feeding the (C) glass fiber, and extruding the resulting mixture at a discharge amount of 20 kg/h, a screw rotation speed of 200 rpm, and a barrel temperature of 260°C. In Table 1, every raw component is shown by ratio by weight.

Using the injection-moulder (manufactured by Sumitomo Heavy Industries, Ltd., type: SH-100), the above-mentioned testing specimens (2) to (6) (three kinds of plate testing specimens having 10 cm long and 10 cm wide and having a thickness of 3 mm, and a testing specimen having a thickness of 1/32 inch according to the UL-94 standard) were formed at a cylinder temperature of 270°C, a mold temperature of 80°C from those resin composition pellets.
As the testing specimen (1), an ISO tensile testing specimen (IS03167) was formed at 265°C, using the injection-moulder (manufactured by Sumitomo Heavy Industries, Ltd., type: S-75 MIII). The results are shown in Table 1. The polybuthylene terephthalate series resin in Example 5 which was obtained by mixing (A-1) resin and (A-4) resin had a glass-transition temperature according to the dynamic viscoelastic method of 58°C; the polybuthylene terephthalate series resin in Example 10 which was obtained by mixing (A-1) resin and (A-4) resin had a glass-transition temperature according to the dynamic viscoelastic method of 56°C; the polybuthylene terephthalate series resin in Example 11 which was obtained by mixing (A-1) resin and (A-4) resin had a glass-transition temperature according to the dynamic viscoelastic method of 56°C; and the polybuthylene terephthalate series resin in Example 13 which was obtained by mixing (A-1) resin and (A-4) resin had a glass-transition temperature according to the dynamic viscoelastic method of 70.5°C.

**[Table 1]**

| | Example | | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| (A) Resin | A-1 | 100.00 | | | 63.13 | 36.87 | 100.00 | 100.00 | 100.00 | 40.00 | 40.00 | 40.00 | 100.00 | 15.00 |
| | A-2 | | 100.00 | | | | | | | | | | | |
| | A-3 | | | 100.00 | 36.87 | | | | | 60.00 | | | | |
| | A-4 | | | | | 63.13 | | | | | 60.00 | 60.00 | | 85.00 |
| | A-5 | | | | | | | | | | | | | |
| (B) Phosphinate | B-1 | 25.25 | 25.25 | 25.25 | 25.25 | 25.25 | 14.60 | 14.60 | 55.05 | 28.77 | 22.09 | 28.57 | | 25.25 |
| | B-2 | | | | | | | | | | | | 25.25 | |
| (C) Amino group-containing triazines | C-1 | | | | | | 6.08 | | | | | 32.38 | | |
| | C-2 | | | | | | | 6.08 | | 21.31 | 18.27 | | | |
| (D) Inorganic filler | D-1 | | | | | | | | 27.52 | 26.64 | 24.92 | 28.57 | | |
| (E) Antioxidant | E-1 | 0.25 | 0.25 | 0.25 | 0.25 | 0.25 | 0.24 | 0.24 | 0.37 | 0.36 | | 0.38 | 0.25 | 0.25 |
| | E-2 | 0.25 | 0.25 | 0.25 | 0.25 | 0.25 | 0.24 | 0.24 | 0.37 | 0.36 | | 0.38 | 0.25 | 0,25 |
| (F) Mold release agent | Paraffin WAX | 0.13 | 0.13 | 0.13 | 0.13 | 0.13 | 0.12 | 0.12 | 0.18 | 0.18 | 0.17 | 0.19 | 0.13 | 0.13 |
| (G) Drip inhibitor | Fluorine resin | 0.38 | 0.38 | 0.38 | 0.38 | 0.38 | 0.36 | | | | | | 0.38 | 0.38 |
| Tensile strength (%) | | 21.0 | 65.0 | 15.4 | 18.1 | 13.5 | 25.0 | 22.0 | 3.2 | 2.8 | 2.7 | 2.8 | 14.3 | 11.5 |
| Weld tensile strength (%) | | 3.0 | 8.1 | 2.4 | 2.5 | 2.2 | 3.5 | 3.0 | 1.0 | 0.9 | 0.9 | 1.0 | 2.1 | 2.0 |
| Weld retention (%) | | 12.5 | 11.1 | 13.5 | 12.1 | 14.0 | 12.3 | 12 | 23.8 | 24.3 | 25 | 26.3 | 12.8 | 10.3 |
| Flame resistance | 0.8mm | V-0 | V-0 | V-0 | V-0 | V-0 | V-0 | V-0 | V-0 | V-0 | V-0 | V-0 | V-0 | V-0 |
| CTI | V | 600 | 600 | 600 | 600 | 600 | 600 | 600 | 600 | 600 | 600 | 600 | 600 | 600 |
| Amount of warpage | mm | 0.3 | 0.2 | 0.3 | 0.4 | 0.5 | 0.3 | 0.3 | 1.1 | 1.1 | 1.4 | 1.2 | 0.3 | 0.6 |
| Flame retardant-bleeding out | | ○ | ○ | ○ | ○ | ○ | ○ | ○ | ○ | ○ | ○ | ○ | ○ | ○ |
| Demoldability | | ○ | ○ | ○ | ○ | ○ | ○ | ○ | ○ | ○ | ○ | ○ | ○ | ○ |

**[Table 2]**

| | Comparative Example | | | | | | | | | |
|---|---|---|---|---|---|---|---|---|---|---|
| | | 1 | 2 | 3 | 4 | 5 | 6 | 7 | 8 | 9 |
| (A) Resin | A-1 | | | | | | | | | |
| | A-2 | | | | | | | | | |
| | A-3 | | | | | | | | | |
| | A-4 | 100.00 | | 40.00 | 100.00 | 40.00 | 100.00 | 100.00 | 40.00 | 100.00 |
| | A-5 | | 100.00 | | | | | | 60.00 | |
| (B) Phosphinate | B-1 | 25.25 | 25.25 | 25.25 | 18.87 | 18.87 | 55.05 | 28.77 | 28.93 | |
| | B- 2 B-2 | | | | | | | | | 25.25 |
| (C) Amino group-containing triazines | C-1 | | | | 6.29 | 6.29 | | | | |
| | C-2 | | | | | | | 21.31 | 21.43 | |
| (D) Inorganic filler | D-1 | | | | | | 27.52 | 26.64 | 26.79 | |
| (E) Antioxidant | E-1 | 0.25 | 0.25 | 0.25 | 0.25 | 0.25 | 0.37 | 0.36 | 0.36 | 0.25 |
| | E-2 | 0.25 | 0.25 | 0.25 | 0.25 | 0.25 | 0.37 | 0.36 | 0.36 | 0.25 |
| (F) Mold release agent | Paraffin WAX | 0.13 | 0.13 | 0.13 | 0.13 | 0.13 | 0.18 | 0.18 | 0.18 | 0.13 |
| (G) Drip inhibitor | Fluorine resin | 0.38 | 0.38 | 0.38 | 0.38 | 0.38 | | | | 0.38 |
| Tensile strength (%) | | 7.0 | 70 | 24 | 8.0 | 20 | 1.0 | 0.9 | 3.0 | 3.0 |
| Weld tensile strength (%) | | 0.6 | 9.0 | 2.9 | 0.7 | 2.7 | 0.1 | 0.1 | 0.4 | 0.2 |
| Weld retention (%) | | 7.9 | 11.4 | 10.8 | 8.0 | 11.9 | 9.1 | 10.0 | 11.8 | 5.9 |
| Flame resistance | 0.8mm | V-0 | V-1 | V-1 | V-0 | V-1 | V-0 | V-0 | V-1 | V-0 |
| CTI | V | 600 | 600 | 600 | 600 | 600 | 600 | 600 | 600 | 600 |
| Amount of warpage | mm | 0.7 | 0.2 | 0.5 | 0.9 | 0.5 | 1.7 | 1.7 | 1.4 | 0.7 |
| Flame retardant-bleeding out | | ○ | ○ | ○ | ○ | ○ | ○ | ○ | ○ | ○ |
| Demoldability | | ○ | × | × | ○ | × | ○ | ○ | × | ○ |

As is clear from the tables, the composition for comparative Examples are low in degree of tensile elongation, and, even if a polyester elastomer having flexibility is incorporated, the improvement of tensile degree is still insufficient.
On the other hand, the resin compositions of the invention is not only sufficient in improvement of tensile, but also excellent in CTI. In addition, the bleeding-out is not observed, and the composition is excellent in moldability. Therefore, it was found that the composition is excellent.

From those, the flame-retardant polybutylene terephthalate series resin composition of the invention and the resin articles obtained by forming the resin composition are excellent in toughness and CTI, the bleeding-out therein is suppressed to occur, the influence on electric characteristic due to the flame retardant in use thereof reduced, and the resin composition and the resin article are economical since they are excellent in productivity, and therefore, the resin composition and the resin article are expected to be applied to broad scope parts such as connectors and terminals. Furthermore, those may be applied to automobile parts and fabric parts.

### [Industrial applicability]

The flame-retardant polybutylene terephthalate resin composition of the invention is excellent in flame resistance, electric resistance performance and formability even though it does not comprises a non-halogen series flame retardant. As a result, an article excellent in surface appearance, toughness and tracking resistance can be provided by using the composition.
Particularly, the invention is expected to have industrial applicability from the following viewpoints:
1) The composition is excellent in flame resistance, but does not cause environment contamination problems because the flame retardant to be used is a non-halogen series flame retardant, and therefore, when the used waste thereof is burned up, dioxine does not occur.
2) When the molded article is exposed at high temperature, the flame retardant and the like hardly bleed out on a surface of the resin article, and therefore, there is no problem in that the surface appearance of the resin article deteriorates and in that the electric resistance lowers.
3) Since the resin composition is excellent in toughness and tracking resistance, it may be applied to broad scope for electrical and electronics fields.
4) Since the resin composition has moldability comparable to general-purpose PBT, the formation thereof can be carried out at short formation cycle and the productivity in forming an article may be excellent.

## Claims

1. A flame-retardant polybutylene terephthalate series resin composition comprising 100 parts by weight of a polybutylene terephthalate series resin (A) having a glass-transition temperature according to the dynamic viscoelastic method of 0°C to 75°C, and 5 to 70 parts by weight of a metal phosphinate (B).

2. The flame-retardant polybutylene terephthalate series resin composition according to Claim 1, wherein the polybutylene terephthalate series resin (A) is a resin in which 70 mole % or more of carbonic acid component and 70 mole % or more of alcohol component is a component derived from terephthalic acid and a component derived from 1, 4-butanediol account for and, respectively; and the polybutylene terephthalate series resin (A) comprises any one of components derived from polytetramethylene ether glycol, dimer acid, and isophthalic acid as a copolymerized component.

3. The flame-retardant polybutylene terephthalate series resin composition according to Claim 1 or 2, wherein the polybutylene terephthalate series resin (A) is selected from the group consisting of the following (1) to (4):
(1) a resin mainly composed of components derived from terephthalic acid, 1,4-butanediol and polytetramethylene ether glycol, wherein the content of the other components is 3% by weight or less, and the content of the component derived from polytetramethylene ether glycol is 2 to 30% by weight;
(2) a resin mainly composed of components derived from terephthalic acid, 1,4-butanediol and dimer acid, wherein the content of the other components is 3% by weight or less, and the content of the component derived from dimer acid is 0.5 to 30 mole%, relative to the content of the acid component;
(3) a resin mainly composed of components derived from terephthalic acid, 1,4-butanediol and isophthalic acid, wherein the content of the other components is 3% by weight or less, and the content of the component derived from isophthalic acid is 1 to 30 mole%, relative to the content of the acid component;
(4) a mixture of any one of the above-mentioned (1) to (3) and a polybutylene terephthalate resin comprising a copolymerized component in an amount of 3% by weight or less, wherein the content of the polybutylene terephthalate resin in the mixture is 90% by weight or less.

4. tardant polybutylene terephthalate series resin composition according to Claim 1 or 2, wherein the polybutylene terephthalate series resin (A) is selected from the group consisting of the following (1) to (4):
(1) a resin mainly composed of components derived from terephthalic acid, 1,4-butanediol and polytetramethylene ether glycol having a number average molecular weight of 500 to 5000, wherein the content of the other components is 3% by weight or less, and the content of the component derived from polytetramethylene ether glycol is 3 to 25% by weight;
(2) a resin mainly composed of components derived from terephthalic acid, 1,4-butanediol and dimer acid, wherein the content of the other components is 3% by weight or less, and the content of the component derived from dimer acid is 3 to 15% by weight, relative to the content of the acid component;
(3) a resin mainly composed of components derived from terephthalic acid, 1,4-butanediol and isophthalic acid, wherein the content of the other components is 3% by weight or less, and the content of the component derived isophthalic acid is 3 to 15% by weight, relative to the content of the acid component;
(4) a mixture of any one of the above-mentioned (1) to (3) and a polybutylene terephthalate resin other than the above-mentioned (1) to (3) comprising acopolymerized component therewith in an amount of 3% by weight or less, wherein the amount to be added of the polybutylene terephthalate resin in the mixture is 85% by weight or less.

5. The flame-retardant polybutylene terephthalate series resin composition according to any one of Claims 1 to 4, wherein the polybutylene terephthalate series resin has a glass-transition temperature of 0 to 65°C.

6. The flame-retardant polybutylene terephthalate series resin composition according to any one of Claims 1 to 5, wherein the metal phosphinate (B) has an anion part represented by the formula (2) or (3) and a cation part selected from the group consisting of calcium ion, magnesium ion, aluminum ion and zinc ion: 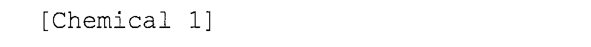 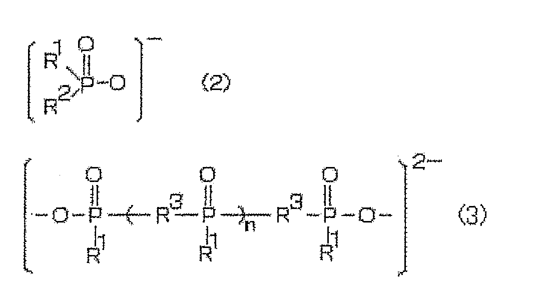 wherein R¹' s and R²' s each independently are an alkyl group having 1 to 6 carbon atoms, or an aryl group which may have a substituent; each R¹ may be the same or different to each other; R³' s are an alkylene group having 1 to 10 carbon atoms, an arylene group which may have a substituent, or a combination thereof; R³' s may be the same or different to each other; n is an integer to 0 to 2.

7. The flame-retardant polybutylene terephthalate series resin composition according to any one of Claims 1 to 6, wherein all melting peaks of the metal phosphinate (B) according to the DCS measurement falls within a range of 180°C or more.

8. The flame-retardant polybutylene terephthalate series resin composition according to any one of Claims 1 to 7, wherein the amount to be added of the metal phosphinate (B) is 10 to 60 parts by weight, relative to 100 parts by weight of the polybutylene terephthalate series resin.

9. The flame-retardant polybutylene terephthalate series resin composition according to any one of Claims 1 to 8, which further comprises 40 parts by weight or less of a salt of an amino group-containing triazine (C), relative to 100 parts by weight of the polybutylene terephthalate series resin.

10. The flame-retardant polybutylene terephthalate series resin composition according to any one of Claims 1 to 8, which further comprises 30 to 50 parts by weight of a salt of an amino group-containing triazine (C), relative to 100 parts by weight of the polybutylene terephthalate series resin.

11. The flame-retardant polybutylene terephthalate series resin composition according to Claim 9 or 10, wherein the amount ratio of the salt of an amino group-containing triazine (C) to the metal phosphinate (B) ((C)/(B)) is 0.1 to 2.

12. The flame-retardant polybutylene terephthalate series resin composition according to any one of Claims 1 to 11, which further comprises 150 parts by weight or less of an inorganic filler (D), relative to 100 parts by weight of the polybutylene terephthalate series resin.

13. An article formed from the flame-retardant polybutylene terephthalate series resin composition according to any one of Claims 1 to 12.
